# EUROPÄISCHE PATENTSCHRIFT

(11) **EP 0 769 154 B1**
(45) Veröffentlichungstag und Bekanntmachung des Hinweises auf die Patenterteilung: **27.01.1999**
(21) Anmeldenummer: 96914837.8
(22) Anmeldetag: 30.04.1996
(51) Int. Cl.: G02B 6/42, F21V 8/00

(54) **LICHTGENERATOR ZUR EINSPEISUNG IN LICHTLEITFASERN**
LIGHT GENERATOR FOR SUPPLYING OPTICAL FIBRES
GENERATEUR DE LUMIERE POUR ALIMENTER DES FIBRES OPTIQUES

(30) Priorität: 02.05.1995 DE 29507263 U; 22.09.1995 DE 19535341; 26.01.1996 DE 19603025
(43) Veröffentlichungstag der Anmeldung: 23.04.1997
(73) Patentinhaber: Leber, Hermann, 90455 Nürnberg (DE)
(72) Erfinder: Leber, Hermann, 90455 Nürnberg (DE)
(74) Vertreter: Menges, Rolf, Dipl.-Ing.
(86) Internationale Anmeldenummer: DE9600745
(87) Internationale Veröffentlichungsnummer: WO9635134

(56) Entgegenhaltungen:
- EP-A- 0 003 312
- DE-A- 2 724 304
- DE-U- 8 704 696
- FR-A- 1 592 854
- US-A- 5 099 399
- PATENT ABSTRACTS OF JAPAN vol. 010, no. 111 (P-451), 25.April 1986 & JP,A,60 242408 (SUWA SEIKOSHA KK), 2.Dezember 1985,

## Beschreibung

Die Erfindung bezieht sich auf einen Lichtgenerator zur Einspeisung von Licht in Lichtleitfasern oder -rohre nach dem Oberbegriff des Patentanspruchs 1, wie sie zur Zeit z.B. für Effektbeleuchtungen, Beleuchtungen von Vitrinen und kleinen Beleuchtungsanlagen oder als Untersuchungsleuchten eingesetzt werden.

Solcherart Lichtgeneratoren dienen vor allem zur Einspeisung von Kunstlicht in Lichtleitfasern, die die Verteilung des Lichtstromes auf einen oder mehrere Lichtauslässe vornehmen.

Bei den bekannten Anlagen mit Lichtleitfasertechnik werden Lichtgeneratoren verwendet, die vergleichsweise nur niedrig bestückbar sind (150 W) und/oder bei größerer Leistung mit Ventilatoren ausgestattet sein müssen. Dieses bedeutet einen erhöhten Energieverbrauch, Geräuschentwicklung und zudem forciert bewegte Kühlluft.

Die bekannten Lichtgeneratoren bedingen hohe Investitionskosten, kurze Lebensdauer der Leuchtmittel, bei niedrigen Wirkungsgraden. Sie sind relativ unwirtschaftlich und stellen in gewissem Maße Sicherheitsrisiken dar. Bei größeren Lichtleistungen oder Beleuchtungsanlagen muß eine größere Anzahl von Lichtgeneratoren eingesetzt werden, wodurch die Nachteile noch summiert werden.

Die bekannten Lichtgeneratoren (siehe Prospekt der Firma Kotzold Direct-Source Fibre Optics", 1994?) bestehen beispielsweise im wesentlichen aus einem länglichen Gehäuse, in dessen Inneren in Axial-Aufeinanderfolge an der einen Stirnwand ein axial wirksames Gebläse, danach eine Hochleistungslampe (z.B. eine Halogendampflampe) mit Vorlampenzündgerät, ein die Lampe in Strahlrichtung umgebender Hohlspiegel, ein UV-IR-Filter und schließlich in der zweiten Gehäusestirnwand eine Verbindungshülse für das eine Ende eines Lichtleiters angeordnet sind. An dieser Stirnwand sowie an diesem stirnwandigen Ende des Gehäusemantels sind Kühlungsauslässe zum Austritt der Gebläse-Kühlluft, die im wesentlichen über alle Lichtgenerator-Innenelemente kühlend streicht, vorgesehen. Abgesehen davon, daß eine Anordnung eines Gebläses/Ventilators einen erhöhten Energieverbrauch, gepaart mit entsprechenden Geräuschentwicklung und erhöhtem Kühlluftbedarf bedeutet, ist es nicht immer von Vorteil, die Zone mit der Lampe stark abzukühlen, da eine gewisse Temperatur notwendig ist, um eine optimale Zündung und Funktionsfähigkeit der Lampe aufrecht zu erhalten. Durch die Anordnung eines Gebläses hinter der Lampe, also praktisch direktes Anblasen des Lampensystems, wird eine Temperaturreduzierung in erster Linie da erzielt, wo sie gar nicht wünschenswert ist. Des weitern wird durch den Hohlspiegel das Licht nicht optimal und zielgerichtet auf das Eintrittsende des Lichtleiters konzentriert, so daß auch hier Energie verloren geht. Schließlich ist durch die Anordnung des Wärmefilters knapp vor dem Lichtleiterende, also am entgegengesetzten Ende des Gebläses und hinter dem relativ groß sich öffnenden Reflektor, eine optimale Kühlung des Reflektors durch die stirnseitigen und die seitlichen Kühlauslässe nur gesichert, wenn ein relativ hoher Kühlluftdurchlaß sichergestellt ist.

Im allgemeinen kann zu den bekannten Lichtgeneratoren gesagt werden, daß diese entweder nur niedrig bestückbar (150 W) sind und/oder zumindest bei größerer Leistung und somit höherer Bestückung mit Ventilatoren ausgestattet sein müssen bzw. sind. Die bekannten Lichtgeneratoren bedingen hohe Investitionskosten, eine kurze Lebensdauer der Leuchtmittei, bei niedrigen Wirkungsgraden. Sie sind relativ unwirtschaftlich und stellen in gewissen Maße Sicherheitsrisiken dar, da bei Ausfall der Ventilatoren eine Überhitzung stattfindet. Zudem ist bei erforderlichen größeren Lichtleistungen oder größeren Beleuchtungsanlagen unter Verwendung der bekannten Lichtgeneratoren der Einsatz einer größeren Stückzahl von Generatoren notwendig, was eine Vervielfachung der entsprechenden Nachteile und Unwirtschaftlichkeit bedeutet.

Die am Markt befindlichen Systeme werden am Markt bevorzugt, nur als Effektbeleuchtungen, Beleuchtungen von Vitrinen und kleinen Leuchten oder als Untersuchungsleuchten eingesetzt. Sie sind nur für elektrische Beleuchtung, also Kunstlicht geeignet. Eine Verwendung bzw. Mitverwendung von Tageslicht zur entsprechenden Beleuchtung ist zudem mit Hilfe der bekannten Lichtgeneratoren nicht möglich.

Der Erfindung liegt die Aufgabe zugrunde, einen Lichtgenerator der oben genannten Gattung anzugeben, der hochbestückbar ist, also eine sehr hohe Leistung aufweist, mit relativ geringem Energieverbrauch und ohne Kühlluft und Geräuschentwicklung, also wirtschaftlich und umweltfreundlich ist. Zudem soll er die Möglichkeit der Nutzung von Tageslicht für die entsprechenden Beleuchtungssysteme ermöglichen (Energieeinsparung, Kostenreduzierung).

Diese Aufgabe wird durch einen erfindungsgemäßen Generator mit den kennzeichnenden Merkmalen des Patentanspruchs 1 gelöst. Weitere vorteilhafte Ausgestaltungen und Weiterentwicklungen des Erfindungsgedankens sind in den Unteransprüchen gekennzeichnet. Demgemäß sind zwischen Hohlspiegel und abführendem Lichtleiterende in axial beabstandeter Reihenfolge zwei Sammellinsen so angeordnet, daß das von der zweiten Linse konzentrierte Licht im wesentlichen ganz in den Lichtleiter fällt. Hierdurch wird das gesamte, von der Lampe ausgestrahlte Licht optimal in den abführenden Lichtleiter eingebracht, eine hohe Effizienz sicherstellend.

Zudem ist die erste Linse so aufgebaut und entsprechend oberflächenbehandelt und beschichtet, daß sie als "Bremslinse" wirkt, also Wärme absorbiert und/oder reflektiert. Vorzugsweise sind beide Sammellinsen in an sich bekannter Weise gehärtet und "beschlämmt" zur entsprechenden Wärmeabfuhr und Zurückhaltung der IR-Strahlung. Zudem sind die Linsen im Gehäuse so befestigt bzw. angeordnet, daß sie in Gehäuse-Achsquerrichtung wandähnlich abschließend wirken, axial aufeinanderfolgende, geschlossene Kammern bildend. Durch die beiden Linsenwände werden somit im Gehäuse drei Kammern gebildet, nämlich eine Lampenkammer, eine Linsen-Zwischenkammer und eine Lichtleiterkammer. Wesentlich ist des weitern, daß die im Gehäusemantel im wesentlichen vertikal weisenden Lüftungsöffnungen so angeordnet sind, daß jede Gehäusekammer mindestens eine obere und eine untere Lüftungsöffnung aufweist. Die in den Kammern gestaute Wärme wird durch die jeweilig obere Öffnung austreten, wobei durch die entsprechende untere Öffnung kühle Luft nachfließt. Durch die auf diese Weise erzeugte Kaminwirkung wird eine mechanische Lüftung und Kühlung überflüssig. Selbstverständlich sind die Lüftungsöffnungen querschnittsmäßig entsprechend auszulegen und an geeigneter Stelle anzubringen, so daß eine optimale Kühlung erfolgt.

Von Vorteil ist, wenn die Kühlöffnungen jeweils paarweise angeordnet sind, so daß jeweils einer oberen Öffnung eine untere Öffnung möglichst im wesentlichen vertikal und gleichzeitig koaxial gegenüberliegt, wodurch eine besonders gute Kaminwirkung erzielt wird.

Des weiteren ist von Vorteil, wenn die zwei vertikal ausgerichteten Lüftungsöffnungen, also die Öffnungspaare, jeweils in unmittelbarer Nähe der Gehäuse-Kammern-Innenwände, d.h. der Linsenwände, angeordnet sind. Dadurch daß diese Linsenwände die durch die Linsen abgeführte Wärme aufnehmen und an das Gehäuse weiterleiten, ist eine Anordnung der Öffnungen in deren unmittelbarer Nähe besonders positiv, da die durch das Gehäuse vertikal durchstreichende Kühlluft näher an denjenigen Elementen, die die höchste Wärmeentwicklung bzw. Abgabe aufweisen, entlangstreicht, wodurch die Wärmeabfuhr optimiert wird.

So kann z.B. in der Lampenkammer ein Öffunungspaar nur in unmittelbarer Nähe der Linsenwand angeordnet werden, wodurch nur diese Kammerzone intensiv gekühlt wird, während die Kammerzone, in der wegen der Lampentemperatur eine höhere Temperatur sinnvoll ist, keine besondere Kühlungsvorkehrung über Lüftungsöffnungen vorgesehen ist. In der Linsenzwischenkammer ist von Vorteil, wenn z.B. zwei Öffnungspaare angeordnet sind und zwar so, daß jeder der beiden Linsenwände eine Öffnungspaar unmittelbar zugeordnet ist. Hierdurch wird ein besonders guter Kühlluftdurchtritt, also eine optimale Wärmeabfuhr unmittelbar an den Wandzonen der Linsenkammer erreicht. Schließlich sind auch in der Lichtleiterkammer in unmittelbarer Nähe zur Linsenwand Lüftungsöffnungen angeordnet, um die von der Linsenwand abgestrahlte Wärme abzuführen. In Richtung auf die Stirnwand mit der Lichtleiterfassung ist eine Anordnung von Lüftungsöffnungen nicht notwendig, da in dieser Zone keine wärmeabgebenden Elemente mehr zu finden sind.

Zur Optimierung der Wärmeabfuhr und somit der Kühlung sind die Kühlrippen als Quer-Umfangsrippen ausgebildet, die vorzugsweise in den Regionen des Gehäusemantels angeordnet sind, die den Gehäusezwischenwänden, also den Linsenwänden sowie der Lichtquelle, benachbart sind. Somit sind kühlende Umfangsrippen an der Mantelaußenfläche der Lampenkammer, der Linsenzwischenkammer und in der ersten kurzen Zone der Lichtleiterkammer vorgesehen. An der weiteren überwiegenden Mantelfläche der Lichtleiterkammer sind Kühlrippen weder notwendig noch sinnvoll, da in dieser Kammerzone keine besondere Wärmeabfuhr notwending ist. Zur weiteren erhöhten Wärmeabfuhr bei hohen Leistungen bzw. Temperaturreduzierung im letzten Gehäuseabschnitt können die Kühlrippen zum Lichtaustritt hin isoliert werden, so daß die Wärme nicht von den Kühlrippen über den Gehäusemantel in den Lichtaustrittbereich übertragen wird.

Somit sind aufgrund der erfindungsgemäßen Kühlmethode selbst bei hohen Lampenleistungen keine beweglichen Teile (Gebläse, Ventilatoren) erforderlich, wodurch die Gefahr der Zerstörung des Lichtgenerators infolge eines Ausfalls der Kühlung ausgeschlossen ist.

Gemäß einer besondern, vorteihaften Ausgestaltung des Erfindungsgedankens sind Hohlspiegel, Lampe und Linsen so ausgebildet und zueinander angeordnet, daß die Brennpunkte des Spiegels und der Lampe auf den Brennpunkt der ersten Linse fokussiert sind, wodurch die Lampen-Lichstrahlen in ein paralleles Strahlenbündel umgewandelt werden. Hierdurch wird das Lampenlicht optimal konzentriert und ausgenutzt, so daß ein guter Wirkungsgrad erzielt wird. Die parallelen Strahlen der ersten Linse treffen dann auf die zweite Sammellinse, die nach Bedarf wiederum Wärme reflektiert und/oder absorbiert und die Lichtstrahlen erneut auf einen Brennpunkt vereinigt, der im ableitenden Lichtleiterende liegt. Somit wird das Licht der Lampe konzentriert, jedoch ohne IR-Strahlenkomponenten in den abführenden Lichtleiter eingebracht. Das im Kupplungsstück zusammengefaßte und für Lichteinkopplung entsprechend behandelte Lichtleitfaserbündel wird dabei in der Führung des Kupplungsstücks des Gehäuses so fokussiert, daß der durch das System aus Leuchtmittel, Spiegel und Linsen erzeugte Lichststrom optimal aufgenommen werden kann. Dabei ist die Brennweite der zweiten Linse so gewählt, daß der Lichtkegel dem Öffnungswinkel der Lichtleitfaser optimal angepaßt ist (z.B. ca. 60°),

Das Linsensystem des erfindungsgemäßen Lichtgenerators dient zum einen der Optimierung der Bedingungen zum Einkoppeln des Lichtes in die Lichtleitfasern. Zum anderen wird erreicht, daß am Kopplungsstück die Temperatur so weit herabgesetzt ist, daß ein Schmelzen der Lichtleitfasern nicht erfolgt.

Bei sehr hoher Bestückung ist von Vorteil, daß in der Linsenzwischenkammer, d.h. in der Kammer zwischen den beiden Linsen, ein zusätzlicher IR-Wärmeschutzfilter angeordnet ist. Von Vorteil ist, wenn dieser zusätzliche Filter in der Linsenzwischenkammer im wesentlichen mittig angeordnet ist, wodurch statt einer Unterteilung in drei Kammern nunmehr eine Unterteilung in vier Kammern vorgesehen ist. Selbstverständlich sind die Lüftungsöffnungen auch in dieser neuen Kammerunterteilung wie vorhergehend entsprechend optimiert angeordnet, so daß eine gute Wärmeabfuhr sowohl von den Linsenwänden als auch von der Filterwand stattfinden kann. Durch die Unterteilungen des Gehäuseinnenraumes in nunmehr vier axial hintereinander angeordente Kammern wird die Wärmeableitung in mehreren Kammern und somit in mehreren Etappen hintereinander vollzogen, so daß bis zum Lichtaustritt hin eine optimale Temperaturreduzierung erreicht wird. Mit diesen erfindungsgemäßen Maßnahmen wird die Temperatur bei Kunstoffasern, auch bei hoher Bestückung, auf unter 80°C beschränkt.

Von Vorteil ist erfindungsgemäß des weiteren, daß der Hohlspiegel mit der Lampe im wesentlichen unmittelbar an der der Lichtleiterkopplungswand gegenüberliegenden Stirnwand des Gehäuses angeordnet ist. Dies ist nur dadurch möglich, daß erfindungsgemäß kein Ventilator bzw. Gebläse zur Kühlung notwendig ist, der zwischen Lampe und entsprechender Stirnwand einen erheblichen Platzbedarf bedingt. Somit wird an der Lampeneingangsseite ein erheblicher Raum eingespart, der wiederum an der unteren Lampenseite für das Linsensystem verwendet werden kann. Dadurch ist auch durch den Einbau dieses erfindungsmäßig zusätzlichen Linsensystems, mit seinen besonderen Vorteilen, kein wesentlicher zusätzlicher Raumbedarf vorhanden. Somit kann gesagt werden, daß bei etwa den gleichen Abmessungen eine ganze Reihe von Vorteilen erzielt werden kann.

Um eine Überhitzung der Linsen zu vermeiden und die aufgenommene Wärme abzuführen, sind diese in ein Material mit guten Wärmeleiteigenschaften und geeigneten Wärmeausdehnungskoeffizienten eingefaßt. Diese Einfassung kann direkt die Linsenwand sein oder als separates, ringförmiges Element in eine entsprechende gut wärmeleitfähige Wandung eingearbeitet sein. Dabei kann diese Wandung einen beidseitig herausragenden Fußteil aufweisen, der eine breite Kontaktierung mit dem Gehäusemantel ermöglicht und somit eine optimale Wärmeabfuhr durch den entsprechenden Mantelteil zu den Kühlrippen sicherstellt.

Von Vorteil ist des weiteren, wenn Linsen und Filter im wesentlichem die gleiche Umfangsaußenabmessungen aufweisen und im wesentlichen in gleicher Weise im Gehäuse abdichtend befestigt sind, vorzugsweise über die vorerwähnten Linsenwände, die im Falle des Filtereinbaus in eine solche Wand dann als Filterwand fungieren.

Von ganz besonderem Vorteil ist, wenn erfindungsgemäß in die Lichtleitkammer Tageslicht über Licht-Rohrleiter oder Lichtleitfasern eingespeist wird und zwar in vorteilhafter Weise so, daß dies eingebrachte Tageslicht möglichst vollständig in das Ende des abführenden Lichtleiters fällt. Hierzu ist in entsprechender Schräganordnung mindestens ein Lichtleitfaserbündel oder ein Hohlleiter, vorzugsweise mehrere davon, in gleichmäßiger Umfangsaufteilung anzuordnen. Bei ausreichend intensivem Tageslicht kann der erfindungsgemäße Generator nur dieses zu Weiterleitung verwenden. Es kann jedoch auch eine Mischung aus Tageslicht und Kunstlicht in den ableitenden Lichtleiter eingebracht werden. Hierfür ist von Vorteil, wenn in der Lichtleiterkammer ein Lichtsensor vorgesehen ist, der mit dem Lampenvorschaltgerät verbunden ist und ein Zu- oder Abschalten der Lampe, entsprechend der Helligkeit des über die Tageslichtleiter in das ableitende Lichtleiterende eingebrachten Lichts, bewirkt. Dabei ist das erfindungsgemäß verwendete Vorschaltgerät regelbar, so daß das künstliche Licht der Lampe nur teilweise oder ganz dazugeschaltet wird, wenn das Tageslicht nicht ausreicht. Es ist zu erkennen, daß hiermit eine wesentliche Energieeinsparung erzielt wird, insbesondere wenn der erfindungsgemäße Lichtgenerator in Räumen eingesetzt wird, wo nur wenig oder gar kein Tageslicht direkt einfällt und dieses Tageslicht über einen erfindungsgemäßen Lichtgenerator in den Raum eingebracht wird.

Diese Art der Beleuchtung ist unter allen Umständen und vor allem bei kritischen Umfeldbedingungen einsetzbar. Besonders hervorzuheben sind Bereiche, bei denen mit herkömmlicher Lichttechnik Gefahren und/oder Schäden für Menschen, Tiere oder Sachen von der Beleuchtungsanlage ausgehen, in Form von elektrischer Spannung, elektromagnetischer Strahlung, Brandgefahr, IR- und UV-Strahlung. Bisher wurden für solche Anwendungszwecke Leuchten verwendet, die speziell auf die jeweilige Situation angepaßt sind, wie Ex-Leuchten, wasserund staubdichte oder gekühlte Leuchten usw. Diese bedingen jedoch häufig hohe Investitionskosten und/oder kurze Lebensdauer der Leuchtmittel sowie niedrige Wirkungsgrade.

Einen weiteren Vorteil weist diese Lichtleiterbeleuchtung bei Anwendungen auf, bei denen durch Art und/oder Anordnung der Leuchten ein hoher Aufwand für Wartung und Unterhalt erforderlich ist, wie z.B. bei einer hohen Anordnungszahl an Punktleuchten mit großen Stückzahlen, bei Leuchtmitteln mit geringer Lebensdauer wie Glüh- und Halogenlampen.

Nur durch die erfindungsgemäß höhere Bestückung mit Entladungslampen eines Lichtgenerators wird die Beleuchtung ausgedehnter Objekte wirtschaftlich möglich. Es können somit Stadien, Hallen, Kinos, Schwimmbäder, Werkstätten, Saunas, Dampfbäder, Kühlräume, Fernsehstudios usw. problemlos beleuchtet werden. Weitere Einsatzmöglichkeiten sind in Flugzeugen, Schiffen, Fahrzeugen aller Art sowie in Vandalen-Problemzonen wie Arrestzellen.
In explosionsgefährdeten Bereichen, in Hochtemperaturbereichen, Start-/Landebahnen oder Straßenproblempunkten kann mit Hilfe des erfingungsgemäßen Lichtgenerators die Beleuchtung stromlos und wasserdicht problemlos eingebaut werden.

Der erfindungsgemäße Lichtgenerator weist somit nahezu uneingeschränkte risikofreie Einsatzmöglichkeiten auf, auch bei ausgedehnten Anlangen, eine Einsparung durch hohe Wirtschaftlichkeit, besonders im Unterhalt und Umweltfreundlichkeit durch Energie und Leuchtmitteleinsparung und praktisch geräuschlose Arbeitsweise auch bei hoher Bestückung.

Lampen bis zu einer Leistung von 2000 W können derzeit durch erfindungsgemäße Fokussierung und Wärmefilter in verschiedenen Ausführungen eingesetzt werden.

Von Vorteil ist des weiteren, daß bei kleineren Einheiten die Vorschaltgeräte im Gehäuse untergebracht werden können, während sie bei größeren Einheiten in einem getrennten Gehäuse unterbringbar sind.

Von Vorteil kann des weiteren sein, wenn vor dem Kopplungsstück, d.h. vor Eintritt in das abführende Lichtleiterende, noch eine zusätzliche Wärmebremse und/oder eine an sich bekannte feste Farbscheibe oder ein drehendes Farbrad, das das Licht nach Wunsch farbig gestaltet, angeordnet wird. Die zusätzliche Wärmebremse ist insbesondere dann sinnvoll, wenn das eingeführte Tageslicht nicht vorab ausreichend IR-gefiltert ist, wobei dann diese Wärmebremse, die ein an sich bekannter IR-Filter sein kann, ebenfalls durch entsprechende Wärmeleitwände, Lüftungsöffnungen und Außenrippen zu kühlen ist.

Nachfolgend wird die Erfindung anhand zweier Ausführungsbeispiele unter bezug auf die Zeichnung näher beschrieben.

Es zeigt:
- Fig. 1:: eine schematische Darstellung eines axialen Querschnitts durch einen erfindungsmäßigen Generator in erster Ausführung, nur für Kunstlicht auslegt, und
- Fig. 2:: einen Schnitt ähnlich wie in Fig. 1 durch einen erfindungsgemäßen Lichtgenerator zweiter Ausführung, ausgelegt für Kunst- und Tageslicht und sehr hohe Bestückung.

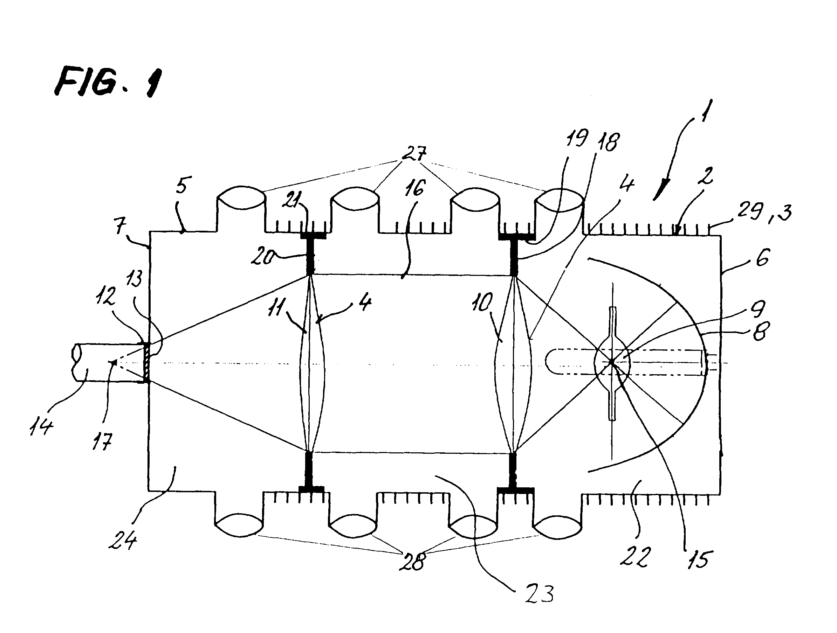

Der in Fig. 1 dargestellte Lichtgenerator 1 stellt ein erstes Ausführungsbeispiel dar. In einem Gehäuse, das eine längliche Form mit geeignetem Querschnitt, z. B. zylindrische oder auch rechteckige Form, aufweist, sind die wesentlichen Funktionsbauelemente angeordnet. Das Gehäuse kann vorzugsweise aus Metall oder einem anderen geeigneten, wärmeleitenden Material geformt sein und an seinem Außenmantel 5 Quer-Umfangskühlrippen 29 und Lüftungsöffnungen 27, 28, sowie eine erste Stirnwand 6 und gegenüberliegend eine zweite Stirnwand 7 aufweisen, einen, abgesehen von den Mantel-Lüftungsöffnungen, geschlossenen Gehäuseinnenraum bildend.

In unmittelbarer Nähe der ersten Stirnwand 6 ist ein Hohlspiegel 8 angeordnet, der eine Hochleistungslampe, z.B. eine Halogendampflampe, umgibt. In weiterer axialer Folge sind zwei Sammellinsen 10 und 11 angeordnet, während in der zweiten Stirnwand 7 ein Kopplungsstück 12, mit einer Kopplungsstück-Führung 13 zur befestigenden und einstellbaren Aufnahme des einen Endes eines Lichtfaserbündels 14 vorgesehen ist.

Der Hohlspiegel 8, die Lampe 9 und die erste Sammellinse 10 sind so ausgebildet bzw. ausgelegt und zueinander angeordnet, daß deren Brennpunkte auf den Brennpunkt 15 der ersten Sammellinse 10 fokussiert sind. Damit werden die durch die Lampe erzeugten Lichtstrahlen in ein paralleles Strahlenbündel 16 umgewandelt, die dann, auf die zweite Sammellinse 11 auftreffend, auf den Brennpunkt 17 dieser Linse 11 vereinigt werden. Das im Kopplungsstück 12 zusammengefaßte und für Lichteinkopplung entsprechend behandelte Lichtfaserbündel 14 wird in der Kopplungsstück-Führung im Gehäuse so fokussiert, daß der durch das System aus Leuchtmittel, Spiegel und Linsen erzeugte Lichtstrom optimal aufgenommen werden kann.

Zumindest die erste Sammellinse 10 ist mit einer IR-Filter-Beschichtung 4 ausgestattet, damit die von der Lampe ausgehende Wärmestrahlung von den nachgeschalteten optischen Einrichtungen, insbesondere dem Lichtleiter, ferngehalten wird. Insbesondere das Material und die Form der Linse sind so ausgewählt, daß ein Teil der Wärme reflektiert und/oder absorbiert und abgeleitet wird. Hierfür wird die Linse in bekannter Weise gehärtet und "geschlämmt" und ist zusätzlich in einem Material mit guter Wärmeleiteigenschaft und geeignetem Wärmeausdehnungskoeffizienten eingefaßt. Diese Einfassung kann gleichzeitig eine Linsenwand 18 sein, die sich vom Umfang der Linse ausgehend bis an die Innenfläche des Gehäusemantels 5 erstreckt. Um einen guten Wärmeleitkontakt mit dem Gehäusemantel 5 zu erreichen, weist die Wand 18 einen sich in axiale Richtung erstreckenden, ringförmigen bzw. zylindrischen Fuß 19 auf. Selbstverständlich kann die zweite Sammellinse 11 ebenfalls als IR-Filter ausgerüstet sein und ebenfalls eine sogenannte "Bremslinse" darstellen.

Sie ist hierfür ebenfalls in einer (zweiten) Linsenwand 20 mit Wandfuß 21 gefaßt und im Inneren des Gehäuses 2 befestigt. Zumindest ein Teil der Linsenwand 18, 20 und der Fuß 19, 21 können einstückig mit dem Gehäusemantel 5 gefertigt sein (z. B. als Gußteil) und die Linsenfassung an der so bereit gestellten Gehäuseinnenwand gut kontaktierend, z.B. durch Anflanschen, befestigt sein, wodurch eine besonders gute Wärmeübertragung bzw. -ableitung erzielt wird. Auch kann nur der Fuß 19, 21 Teil des gehäuses sein und die Linsenwand 18, 21 an diesem angeflanscht oder in sonstiger Weise gut wärmeableitend befestigt sein. Wichtig ist immer, daß der Fuß in unmittelbarer Nähe zumindest einer Quer-Kühlrippe 29 angeordnet ist bzw. mindest eine, vorzugsweise jedoch mehrere Kühlrippen 29 in radialer Fußrichtung vorgesehen sind, zur direkten, optimalen Wärmeableitung.

Durch die beiden Linsenwände 18 und 20 wird der Innenraum des Gehäuses 2 in drei axial aufeinanderfolgende Kammern unterteilt und zwar in eine Lampenkammer 22, eine Linsenzwischenkammer 23 und eine Lichtleiterkammer 24. Diese drei Kammern sind zueinander praktisch luftundurchläßig ausgebildet.

Im Mantel 5 des Gehäuses 2 sind Lüftungsöffnungen 27 und 28, und zwar vorzugsweise als obere Öffnungen 27 und untere Öffnungen 28 ausgebildet, wobei vorzugsweise jeweils einer oberen Öffnung 27 eine untere Öffnung 28 im wesentlichen vertikal, in koaxialer Ausrichtung, gegenüberliegt. Dabei kann in gleichem Radialschnitt bzw. Querschnitt, jeweils oben und unten, ein Öffnungspaar angeordnet sein, oder es können auch unten und oben jeweils mehrere Öffnungen, sich vertikal gegenüberliegend, vorgesehen sein. Dabei sind diese Öffnungen 27, 28 jeweils in unmittelbarer Nähe der Linsenwände 18, 20 angeordnet, also jeweils in den Zonen, in denen eine hohe Wärmeabfuhr erwünscht ist. So sind in deren beiden äußeren Kammern 22 und 24 jeweils an der Linsenwandseite jeweils ein Öffnungspaar 27, 28 vorgesehen, während der mittleren Kammer, also der Linsenzwischenkammer 23, zwei Öffnungspaare 27, 28, ebenfalls jeweils in unmittelbarer Nähe zu den Linsenwänden 18, 20, zugeordnet sind. Die Kühlrippen 3 sind dabei am Mantel 5 so angeordnet, daß sie nur in den Abschnitten vorgesehen sind, in denen eine Wärmeabgabe angestrebt wird. Sie befinden sich an der Mantelaußenseite der Kammer 22, der Kammer 23 und am linsenseitigem Ende der Kammer 24. An der lichtleiterseitigen Mantelfläche der Kammer 24 sind Kühlrippen 3 nicht unbedingt notwendig, da in dieser Kammer bis auf die der Linsenwand 20 nächstliegenden Zone praktisch keine Wärme mehr abzuführen ist.

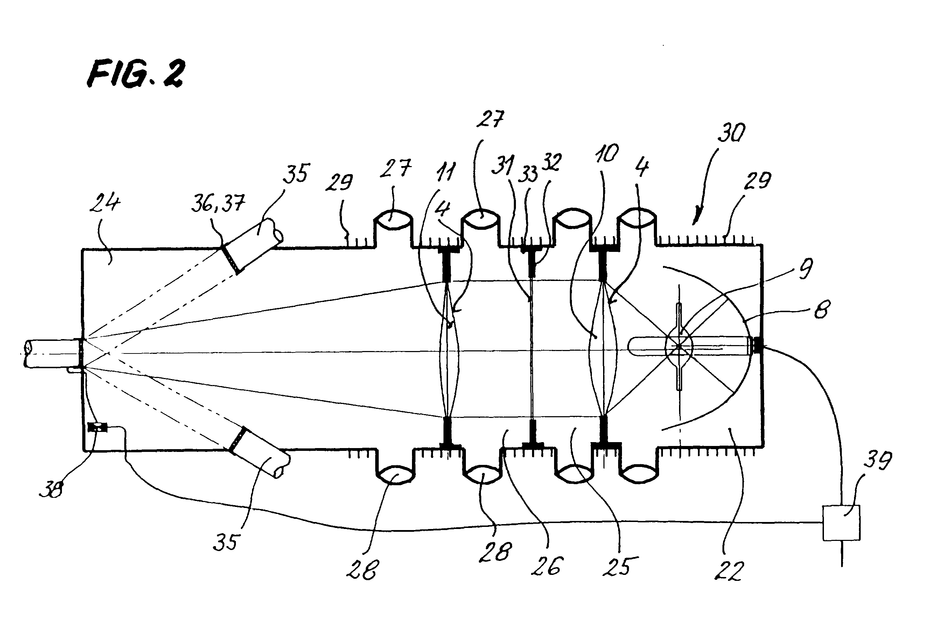

In Fig. 2 ist ein zweites Ausführungsbeispiel des erfindungsgemäßen Lichtgenerators aufgezeigt. Es ist zwar zu erkennen, daß der Lichtgenerator 30 im wesentlichen den gleichen Aufbau hat wie der Lichtgenerator 1, nur daß noch einige zusätzliche Elemente hinzugekommen sind.

So ist zwischen den beiden Sammellinsen 10 und 11, also in der Linsenzwischenkammer im wesentlichen mittig ein zusätzlicher Wärmefilter (IR-Filter) 31 vorgesehen, der in gleicher Weise wie die beiden Linsen 10 und 11 am Außenumfang über wärmeleitfähiges Material gefaßt ist, das wiederum in einer radialen Trennwand bzw. einer Filterwand 32 mit wärmeleitendem Fuß 33 aufgenommen ist, bzw. diese mitbildet. Durch die Filterwand 32 wird die Linsenzwischenkammer nunmehr in zwei Kammern unterteilt und zwar in die beiden Filterkammern 25 und 26. Jeder Filterkammer 25 und 26 ist mindestens ein Paar Lüftungsöffnungen 27, 28 zugeordnet, so daß in den Kammern 25, 26 die durch die Ausfilterung der IR-Strahlen angesammelte Wärme durch die oberen Öffnungen 27 in ausreichendem Maße unter Kaminwirkung abgeführt wird. Es ist zwar zu erkennen, daß die Kühlrippen 29 über die ganze Länge der Lampenkammer 22 und der Filterkammern 25 und 26, sowie am Anfang der Lichtleiterkammer 24, bei letzterer nur in unmittelbarer Nähe der Lüftungsöffnungen 27, 28, vorgesehen sind, nicht jedoch im weiteren, lichtleiterseitigen Verlauf der Lichtleiterkammer 24. Dies ist letztendlich nicht nötig, da durch die beiden Bremslinsen 10, 11 mit ihrer IR-Beschichtung 4, sowie der zusätzlichen IR-Filter 31, auch bei sehr hoher Lampenbestückung bis zu einer Leistung von 2000 Watt, die Wärmestrahlen so weit ausgefiltert und in der Zone bis nahe der zweiten Linse 11 stufenweise abgeführt werden, daß eine weitere, endseitige Wärmeabfuhr nicht mehr notwendig ist. Bei Generatoren mit hohen Leistungen werden diese Kühlrippen vorzugsweise zueinander bzw. zu restlichen Gehäuseteil isoliert.

Aus Fig. 2 ist des weiteren zu erkennen, daß bei diesem zweiten Ausführungsbeispiel die Lichtleiterkammer 24 eine verhältnismäßig bedeutend längere Erstreckung aufweist als beim Ausführungsbeispiel gem. Fig. 1. Der Grund dafür ist die Anordnung mindestens eines oder, wie in Fig. 2 dargestellt, zweier oder mehrerer Tageslichtleiter 35, die aus einem Lichtleiter-Faserbündel bestehen, die durch ein Kopplungsstück 36, mit Kopplungsstück-Führung 37, ähnlich wie der abführende Lichtleiter 14, gefaßt und durch den Gehäusemantel 5 in das Gehäuseinnere hineinreichend angeordnet sind. Die Tageslichtleiter 35 sind dabei winklig zur Längserstreckung des Gehäuses angeordnet und zwar so, daß das über diese eingebrachte Tageslicht voll in das in die Kammer 24 sich öffnende Ende des abführenden Lichtleiters 14 einfällt. Des weiteren ist ein Sensor 38 vorgesehen, der die Lichtintensität am Einfallende des Lichtleiters 14 mißt und mit dem Vorschaltgerät 39 der Lampe 9 in Verbindung steht. Dieses Vorschaltgerät 39, das je nach Größe des Lichtgenerators in dessen Inneren oder als separates Bauteil ausgebildet und angeordnet sein kann, ist vorzugsweise regelbar und zwar in Abhängigkeit von den vom Sensor 38 erhaltenen Werte. Zeigt der Sensor 38 nämlich an, daß eine bestimmte Lichtintensität im Leiter 14 erreicht ist, dann wird das Vorschaltgerät 39 die Lampe 9 dahingehend beeinflußen, daß sie weniger Licht abgibt bzw. diese dimmt oder gar ganz abschaltet. Die Zuschaltung der Lampe 9 kann somit bedarfsweise und mit unterschiedlicher Intensität vorgenommen werden.

Somit kann der Lichtgenerator 30 unter Tageslicht, Kunstlicht oder Tages-Kunst-Mischlicht im wesentlichen gleich gut funktionieren, wodurch insbesondere in Gegenden mit viel intensivem Tageslicht eine erhebliche Energieeinsparung erzielt werden kann.

Selbstverständlich können zur Einspeisung von Tageslicht, statt der Tageslichtleiter 35 Lichtleitrohre verwendet werden. Des weiteren ist anzumerken, daß die Angaben in bezug auf die Anordnung der Lüftungsöffnungen 27, 28 mit oberen Lüftungsöffnungen 27 und unteren Luftöffnung 28 selbstverständlich immer im Zusammenhang mit der Anordnungsweise des Lichtgenerators stehen. Bei der Anordnung des Lichtgenerators an einer vertikalen Wand sind die Lüftungsöffnungen 27, 28 selbstverständlich in einer um 90° verschwenkten Anordnung vorzusehen, bezogen auf eine horizontale Generatoranordnung. Wichtig ist, daß in der jeweiligen Generator-Befestigungsanordnung die Lüftungsöffnungen immer eine vertikale Ausrichtung haben, so daß die Kaminwirkung mit voller Effizienz zustandekommen kann.

Für Anwendungsfälle in Ländern mit hoher Tageslichtintensität und -dauer und insbesondere da, wo kein elektrischer Strom für Kunstlichtbeleuchtung vorhanden ist, kann der Lichtgenerator auch so ausgestaltet sein, daß er im wesentlichen nur noch aus der Lichtleiterkammer, mit zuführenden Tageslichtleitern und abführenden Lichtleiter sowie eventuell zusätzlichen Filtern und/oder Farbfiltern besteht. Hierdurch wird eine billige Beleuchtung in Räumen ohne Tageslicht, z.B. zentrale Innenräume, Kellerräume, fensterlose Zimmer bzw. Gebäude, erreicht.

## Patentansprüche

1. Lichtgenerator zur Einspeisung von Licht in Lichtleitfasern oder -rohre, mit
- einem Gehäuse, das in seinem Mantelteil Außen-Kühlrippen und Kühlöffnungen aufweist,
- an der einen Gehäusestirnwand über ein Kopplungsstück mit seinem einem Ende befestigten Lichtleiter,
- einer Hochleistungslampe, wie Halogendampflampe, die mit einem Hohlspiegel einseitig so umgeben ist, daß das ausgestrahlte Licht in das Lichtleiterende fällt
- einem IR-Filter, der zwischen Hohlspiegelöffnung und Lichtleiterende angeordnet ist,
**dadurch gekennzeichnet,**
- daß zwischen Hohlspiegel (8) und Lichtleiterende (14) in axialer, beabstandeter Aufeinanderfolge zwei Sammellinsen (10, 11) so angeordnet sind, daß das von der zweiten Linse (11) konzentrierte Licht im wesentlichen ganz in den Lichtleiter (14) fällt,
- daß als IR-Filter min. die erste Linse (10) eine entsprechende wärmeableitende Beschichtung (4) aufweist,
- daß die Linsen (10, 11) im Gehäuse (2) so befestigt bzw. angeordnet sind, daß sie in Achsquerrichtung wandähnlich abschließend (18, 20) wirken um so axial aufeinanderfolgende, geschlossene Kammern (22, 23, 24) zu bilden,
- daß die Lüftungsöffnungen (27, 28) in dem Gehäusemantel (5) im wesentlichen vertikal weisend so angeordnet sind, daß jede Kammer min. eine obere (27) und eine untere (28) Öffnung aufweist.

2. Lichtgenerator nach Anspruch 1,
dadurch gekennzeichnet, daß Hohlspiegel (8), Lampe (9) und Linsen (10, 11) so ausgebildet und zueinander angeordnet sind, daß die Brennpunkte des Spiegels (8) und der Lampe (9) auf den Brenpunkt (15) der ersten Linse (10) fokussiert sind, die Lampen-Lichstrahlen in ein paralleles Strahlenbündel (16) umwandelnd.

3. Lichtgenerator nach Anspruch 1,
dadurch gekennzeichnet, daß die Öffnungen (27, 28) paarweise angeordnet sind, so daß immer einer oberen Öffnung (27) eine untere Öffnung (28) im wesentlichen vertikal und gleichzeitig koaxial gegenüberliegt zur Erzielung einer Kaminwirkung.

4. Lichtgenerator nach Anspruch 1,
dadurch gekennzeichnet, daß die vertikal ausgerichteten Lüftungsöffnungspaare (27, 28) jeweils im wesentlichen in unmittelbarer Nähe der Gehäuse-Kammern-Innenwände (18, 20, 32) angeordnet sind.

5. Lichtgenerator nach Anspruch 1,
dadurch gekennzeichnet, daß der Hohlspiegel (8) im wesentlichen unmittelbar an der der Lichtleiterkopplungs-Stirnwand (7) gegenüberliegenden Stirnwand (6) des Gehäuses angeordnet ist.

6. Lichtgenerator nach Anspruch 1,
dadurch gekennzeichnet, daß die Kühlrippen (29) Quer-Umfangsrippen sind, die vorzugsweise an den den Gehäusezwischenwänden (18, 20, 32) benachbarten Regionen des Gehäusemantels (5) angeordnet sind.

7. Lichtgenerator nach Anspruch 1,
dadurch gekennzeichnet, daß in der Linsenzwischenkammer, d. h. in der Kammer zwischen den beiden Linsen (10, 11), mindestens ein zusätzlicher IR-Wärmeschutz-Filter (31) angeordnet ist.

8. Lichtgenerator nach Anspruch 7, dadurch gekennzeichnet, daß der IR-Filter (31) im wesentlichen die gleichen Umfangsabmessungen wie die Linsen (10,11) aufweist und in im wesentlichen gleicher Weise im Gehäuseinnern abdichtend befestigt ist, die Linsenzwischenkammer in zwei Filterkammern (25, 26) unterteilend, so daß im Gehäuseinnern vier Kammern in axialer Aufeinanderfolge vorgesehen sind und zwar eine Lampenkammer (22), zwei Filterkammern (25, 26) und eine Lichtleiterkammer (24).

9. Lichtgenerator nach Anspruch 8,
dadurch gekenntzeichnet, daß die beiden Linsen (10, 11) und vorzugsweise auch der IR-Filter (31) jeweils an ihrem Umfang in einem der Gehäuseinnenform angepaßten, z. B. scheibenförmigen, wärmeableitenden Wandelement (18, 20, 32) gefaßt sind und daß Linsen (10, 11), Filter (31), Kammerwände (18,20, 32) und Gehäusemantelwand (5) mit Kühlrippen (29), in guter Wärmeleit-Verbindung stehen.

10. Lichtgenerator nach Anspruch 1,
dadurch gekennzeichnet, daß min. ein in die Lichtleiterkammer (24) einmündender Tageslicht-Leiter (35) oder -Hohlleiter angeordnet ist, dessen Licht in den ableitenden, stirnseitigen Lichtleiter (14) fällt.

11. Lichtgenerator nach Anspruch 10,
dadurch gekennzeichnet, daß in der Lichtleiterkammer (24) ein Lichtsensor (38) vorgesehen ist, der mit dem Lampenvorschaltgerät (39) verbunden ist und ein Zu- oder Abschalten der Lampe (9), entsprechend der Helligkeit des über die Tageslichtleiter (35) in das ableitende Lichtleiterende (14) eingebrachten Lichts, bewirkt.

12. Lichtgenerator nach Anspruch 10,
dadurch gekennzeichnet, daß die Tageslichleiter (35) im Gehäusemantel (5) über jeweils ein Kopplungsstück (36, 37) in zur Gehäuselängsachse geneigter, auf das abführende, stirnseitige Lichtleiterende (14) weisenden Ausrichtung angeordmet sind.

13. Lichtgenerator nach Anspruch 11,
dadurch gekennzeichnet, daß das Vorschaltgerät (39) entsprechend der vom Sensor (38) angezeigten Lichtintensität regelbar/dimmbar ist.

## Claims

1. Light generator for supplying light to optical fibers, or light pipes, having
- a housing having on its casing external cooling fins and cooling apertures,
- a light conductor having its one end attached to one housing end wall by means of a coupling member,
- a high performance lamp, such as a halogen vapor lamp, surrounded on one side by a concave mirror so that the radiated light falls upon the light conductor end
- an IR filter, which is located between the concave mirror aperture and the light conductor end,
characterized in that,
- between concave mirror (8) and light conductor end (14) two collector lenses (10, 11) are so arranged in axial, spaced-apart sequence that the light concentrated by the second lens (11) falls substantially entirely upon the light conductor (14),
- as the IR filter, at least the first lens (10) has an appropriate heat conducting coating (4),
- the lenses (10, 11) are so attached or arranged within housing (2) that they function like closing walls (18, 20) in the direction transverse to the axis and thereby form axially sequential, closed chambers (22, 23, 24),
- the ventilation apertures (27, 28) are located within the housing casing (5) pointing substantially vertically, so that each chamber has at least one upper (27) and one lower (28) aperture.

2. Light generator according to claim 1, characterized in that the concave mirror (8) lamp (9) and lenses (10, 11) are so constructed and arranged relative to each other that the focal points of the mirror (8) and of the lamp (9) are focused at the focal point (15) of the first lens (10) which transforms the lamp light rays into a bundle of parallel rays (16).

3. Light generator according to claim 1, characterized in that the apertures (27, 28) are arranged in pairs so that each upper aperture (27) has an opposite lower aperture (28) located substantially vertically opposite and also coaxially to provide a chimney effect.

4. Light generator according to claim 1, characterized in that the vertically oriented ventilation aperture pairs (27, 28) are each arranged substantially in the immediate vicinity of the housing chamber 15 interior walls (18, 20, 32).

5. Light generator according to claim 1, characterized in that the concave mirror (8) is located substantially immediately at the end wall (6) opposite the end wall (7) of the light conductor coupling.

6. Light generator according to claim 1, characterized in that the cooling fins (29) are transverse circumferential fins which are preferably located in the region of the housing casing (5) close to the intermediate housing walls (18, 20, 32).

7. Light generator according to claim 1, characterized in that at least one additional IR-heat protective filter (31) is located in the intermediate lens chamber, i.e. in the chamber between the two lenses (10, 11).

8. Light generator according to claim 7, characterized in that the IR filter (31) has substantially the same circumferential dimensions as the lenses (10, 11) and is attached in substantially the same manner sealed to the interior of the housing, subdividing the intermediate lens chamber into two filter chambers (25, 26) so that the interior of the housing contains four chambers in axial sequence, namely one lamp chamber (22) two filter chambers (25, 26) and one light conductor chamber (24).

9. Light generator according to claim 8, characterized in that both lenses (10, 11) and preferably also the IR filter (31) are each retained at their circumference, for example, in a disc-shaped, heat conductive wall element (18, 20, 32) conforming to the interior housing shape and that lenses (10, 11), filter (31), chamber walls (18, 20, 32) and housing casing wall (5) are in good heat conducting contact with cooling fins (29).

10. Light generator according to claim 1, characterized in that there is provided at least one daylight conductor (35) or daylight pipe opening into the light conductor chamber (24), whose light falls upon the exit, head-end light conductor (14).

11. Light generator according to claim 10, characterized in that there is provided in the light conductor chamber (24) a light sensor (38) which is connected to the lamp starter device (39) and performs an on or off switching of lamp (9), depending upon the intensity of the light supplied to the exit light conductor end (14) by daylight conductors (35).

12. Light generator according to claim 10, characterized in that each daylight conductor (35) is positioned in the housing casing (5) by means of a respective coupling element (36, 37) in an orientation inclined with respect to the longitudinal housing axis and pointing toward the exit, head-end light conductor ends (14).

13. Light generator according to claim 11, characterized in that the starter device (39) is adjustable/dimmable as a function of the light intensity indicated by sensor (38).

## Revendications

1. Générateur de lumière pour alimentation de fibres ou tubes optiques, comprenant :
- un carter, présentant, dans sa partie d'enveloppement, des cannelures de refroidissement extérieures et des orifices de refroidissement,
- sur l'une des parois frontales de ce carter, un câble à fibre optique fixé à une des extrémités de cette paroi par l'intermédiaire d'un élément de couplage,
- une lampe à haute puissance, telle que lampe à vapeur halogène, qui est entourée unilatéralement par un miroir concave, de telle façon que la lumière émise soit orientée vers l'extrémité du câble à fibres optiques,
- un filtre IR, disposé entre l'ouverture du miroir concave et l'extrémité du câble à fibre optique,
caractérisé en ce que :
- deux lentilles de convergence espacées (10, 11) sont axialement et successivement disposées entre le miroir concave (8) et l'extrémité (14) du câble à fibres optiques, de façon telle que la lumière concentrée par la seconde lentille (11) arrive pratiquement en totalité dans la fibre optique (14),
- en guise de filtre IR, au moins la première lentille (10) présente un revêtement (4) dissipateur de chaleur adéquat,
- les lentilles (10, 11) sont fixées ou placées dans le carter (2) de façon telle qu'elles agissent comme des parois assurant une fermeture (18, 20) transversalement à l'axe, pour former ainsi des chambres (22, 23, 24) closes se suivant axialement,
- les orifices de ventilation (27, 28) sont ménagés dans la paroi périphérique (5) du carter dans une direction sensiblement verticale, de telle sorte que chaque chambre présente au moins un orifice supérieur (27) et un orifice inférieur (28).

2. Générateur de lumière selon la revendication 1, caractérisé en ce que le miroir concave (8), la lampe (9) et les lentilles (10, 11) sont configurés et agencés les uns par rapport aux autres de façon telle que les foyers du miroir (8) et de la lampe (9) soient focalisés sur le foyer (15) de la première lentille (10), transformant ainsi les rayons lumineux de la lampe en faisceau de rayons parallèles (16).

3. Générateur de lumière selon la revendication 1, caractérisé en ce que les orifices (27, 28) sont agencés deux par deux, de façon à ce qu'il y ait chaque fois un orifice inférieur (28) en regard d'un orifice supérieur (27), quasiment à la verticale et, dans le même temps, coaxialement, afin d'obtenir un effet de cheminée.

4. Générateur de lumière selon la revendication 1, caractérisé en ce que les paires d'orifices de ventilation (27, 28) dirigés verticalement sont respectivement agencées, en substance, à proximité immédiate des parois intérieures (18, 20, 32) des chambres du carter.

5. Générateur de lumière selon la revendication 1, caractérisé en ce que le miroir concave (8) est pratiquement disposé immédiatement sur la paroi frontale (6) du carter qui se trouve en regard de la paroi frontale (7) du couplage du câble à fibres optiques.

6. Générateur de lumière selon la revendication 1, caractérisé en ce que les cannelures de refroidissement (29) sont des cannelures périphériques transversales, qui sont disposées, de préférence, dans les zones de la paroi périphérique (5) du carter limitrophes des parois intermédiaires (18, 20, 32) du carter.

7. Générateur de lumière selon la revendication 1, caractérisé en ce que dans la chambre intermédiaire des lentilles, c'est-à-dire dans la chambre comprise entre les deux lentilles (10, 11), est placé au moins un filtre anticalorique IR (31) supplémentaire.

8. Générateur de lumière selon la revendication 7, caractérisé en ce que le filtre IR (31) présente sensiblement les mêmes dimensions périphériques que les lentilles (10, 11) et est fixé de manière sensiblement identique, en assurant une étanchéité, à l'intérieur du carter, en compartimentant la chambre intermédiaire de lentilles en deux chambres de filtrage (25, 26), de sorte que quatre chambres disposées successivement en alignement axial sont prévues à l'intérieur du carter, à savoir une chambre de lampe (22), deux chambres de filtrage (25, 26), et une chambre de câble à fibres optiques (24).

9. Générateur de lumière selon la revendication 8, caractérisé en ce que les deux lentilles (10, 11) et, de préférence, aussi le filtre IR (31) sont respectivement enchâssés, sur leur périphérie, dans un élément de paroi (18, 20, 32) dissipateur de chaleur adapté à la configuration intérieure du carter, et par exemple en forme de disque, et en ce que les lentilles (10, 11), le filtre (31), les parois de chambre (18, 20, 32) et la paroi périphérique (5) du carter pourvue de cannelures de refroidissement (29) sont en bonne liaison de conduction de la chaleur.

10. Générateur de lumière selon la revendication 1, caractérisé en ce qu'on a prévu au moins un conducteur (35) ou conducteur creux de lumière du jour débouchant dans la chambre (24) de câble à fibres optiques et dont la lumière aboutit dans le câble à fibres optiques (14) conducteur frontal.

11. Générateur de lumière selon la revendication 10, caractérisé en ce qu'on prévoit, dans la chambre (24) de câble à fibres optiques, un détecteur de lumière (28) qui est raccordé au ballast d'amorçage (39) et provoque l'allumage ou l'extinction de la lampe (9), en fonction de la clarté de la lumière introduite dans l'extrémité conductrice de câble à fibres optiques (14) par l'intermédiaire des conducteurs de lumière du jour (35).

12. Générateur de lumière selon la revendication 10, caractérisé en ce que les conducteurs de lumière du jour (35) sont placés dans la paroi périphérique (5) du carter, par l'intermédiaire d'un élément d'accouplement (36, 37), dans une position inclinée par rapport à l'axe longitudinal du carter et dirigée vers l'extrémité conductrice frontale du câble à fibres optiques (14).

13. Générateur de lumière selon la revendication 11, caractérisé en ce que le ballast d'amorçage (39) est réglable/variable en fonction de l'intensité de lumière affichée par le détecteur (38).
